# EUROPÄISCHE PATENTSCHRIFT

(11) **EP 3 695 387 B1**
(45) Veröffentlichungstag und Bekanntmachung des Hinweises auf die Patenterteilung: **06.11.2024**
(21) Anmeldenummer: 18772764.9
(22) Anmeldetag: 10.09.2018
(51) Int. Cl.: G06T 19/20, G06T 15/04

(54) **VERFAHREN ZUR DARSTELLUNG VON BILDERN EINES KAMERASYSTEMS EINES FAHRZEUGS**
METHOD FOR DISPLAYING IMAGES OF A CAMERA SYSTEM OF A VEHICLE
PROCÉDÉ DE REPRÉSENTATION D'IMAGES D'UN SYSTÈME DE PRISE DE VUES D'UN VÉHICULE

(30) Priorität: 11.10.2017 DE 102017218090
(43) Veröffentlichungstag der Anmeldung: 19.08.2020
(73) Patentinhaber: Robert Bosch GmbH, 70442 Stuttgart (DE)
(72) Erfinder: ESPARZA GARCIA, Jose Domingo, 70178 Stuttgart (DE); CANO, Raphael, 70180 Stuttgart (DE)
(86) Internationale Anmeldenummer: PCT/EP2018/074273
(87) Internationale Veröffentlichungsnummer: WO 2019/072466

(56) Entgegenhaltungen:
- UNKNOWN: "360? Wrap-Around Video Imaging Technology Ready for Integration with Fujitsu Graphics SoCs", 1 January 2014 (2014-01-01), XP055406437, Retrieved from the Internet <URL:https://www.fujitsu.com/us/Images/360_OmniView_AppNote.pdf> [retrieved on 20170913]
- JOSÉ DOMINGO ESPARZA GARCIA: "3D Reconstruction for Optimal Representation of Surroundings in Automotive HMIs, Based on Fisheye Multi-Camera Systems", 24 September 2015 (2015-09-24), XP055316600, Retrieved from the Internet <URL:http://www.ub.uni-heidelberg.de/archiv/19316> [retrieved on 20161104]
- MENGMENG YU ET AL: "360° Surround View System with Parking Guidance", SAE INT. J. COMMER. VEH., vol. 7, no. 1, 1 April 2014 (2014-04-01), pages 19 - 24, XP055525933, ISSN: 1946-3928, DOI: 10.4271/2014-01-0157

## Beschreibung

### Technisches Gebiet:

Die vorliegende Erfindung betrifft ein Verfahren zur Darstellung von Bildern eines Kamerasystems eines Fahrzeugs. Insbesondere handelt es sich bei dem Kamerasystem um ein Rundumsichtsystem, das Bilder rund um ein Fahrzeug erfassen kann.

### Stand der Technik:

Aus dem Stand der Technik sind solche Rundumsichtsysteme als Surround-View-Systems (SVS) bekannt. Beispielsweise beschreiben die folgenden Veröffentlichungen solche Systeme: "360 Wrap-Around Video Imaging Technology Ready for Integration with Fujitsu Graphics SoCs", Januar 2014; Esparza Garcia: "3D Reconstruction for Optimal Repräsentation of Surroundings in Automotive HMIs, Baseds on Fisheye Multicamera Systems", Dissertation 2015. Solche Systeme verwenden verschiedene Datentypen, um eine maximale Anzahl an Informationen anzuzeigen. Auf diese Weise wird dem Fahrer die maximale Anzahl an Informationen, die das System bereitstellen kann, angezeigt. Solche Datentypen können insbesondere aus Sensordatenfusionen, aus Informationen einer Cloud, sowie aus vielen anderen Quellen gewonnen werden. Typische Daten aus Sensordatenfusionen umfassen Informationen über belegte und freie Flächen rund um das Fahrzeug, die mittels Videosensoren, Radar-Sensoren, Lidar-Sensoren oder anderen Umfeldsensoren des Fahrzeugs ermittelt werden. Informationen aus einer Cloud können insbesondere Wetterbedingungen und verfügbare Parkplätze sein.

Durch die Vielzahl von Informationen, die durch das SVS angezeigt werden sollen, kann der Fahrer des Fahrzeugs überfordert werden, wenn diese nicht entsprechend angezeigt werden. Dies führt dazu, dass Daten unnötigerweise erfasst werden, die dem Fahrer keinen Mehrwert liefern, da er deren Informationen nicht erkennt. Gleichzeitig wird im Stand der Technik mit erheblichem Rechenaufwand eine sehr aufwendige Anzeige erstellt, die sämtliche Informationen, die dem Surround-View-System zur Verfügung stehen, in einem Anzeigebild integriert. Dieser erhebliche Rechenaufwand ist jedoch oftmals nicht notwendig, um dem Fahrer die aktuell relevanten Informationen darzustellen.

### Offenbarung der Erfindung

Die Erfindung wird durch die unabhängigen Ansprüche definiert. Das erfindungsgemäße Verfahren ermöglicht ein Anzeigen von Informationen in unterschiedlichen Darstellungen. Die Darstellungen werden anhand eines Selektionskriteriums festgelegt. Auf diese Weise ist einerseits ermöglicht, dem Fahrer nur relevante Informationen darzustellen, andererseits ist eine Rechenleistung des Gegendarstellung generierenden Systems erheblich reduziert.

Das erfindungsgemäße Verfahren zur Darstellung von Bildern eines Kamerasystems eines Fahrzeugs ist dazu vorgesehen, dass mit besagtem Kamerasystem erfasste Hindernisse aus der Umgebung des Fahrzeugs auf einer Anzeigevorrichtung dargestellt werden. Das Darstellen erfolgt in einem virtuellen dreidimensionalen Raum. In diesem virtuellen dreidimensionalen Raum werden die erfassten Hindernisse als virtuelle dreidimensionale Objekte dargestellt. Somit erhält der Betrachter den Eindruck, dass es sich um eine räumliche Darstellung handelt, in der räumliche Objekte dargestellt sind. Dies entspricht einem virtuellen Blick auf die tatsächliche Szenerie aus einer entsprechenden virtuellen Kameraposition. Dem Fahrer des Fahrzeugs ist damit eine Übersicht über die aktuelle Szenerie bereitstellbar. Um einerseits die relevanten Informationen optimal darzustellen, andererseits um eine Rechenleistung des die Darstellung auf der Anzeigevorrichtung generierenden Systems zu reduzieren, wird anhand eines Selektionskriteriums festgelegt, ob die virtuellen dreidimensionalen Objekte und/oder der virtuelle dreidimensionale Raum mit Texturen belegt werden, die durch das Kamerasystem generiert werden, oder mit zumindest einer vordefinierten Textur belegt werden. Die vordefinierte Textur kann auch eine einzelne Farbe in verschiedenen Schattierungen sein, so dass auf der Anzeigevorrichtung keinerlei Textur dargestellt wird. Durch den Verzicht auf die tatsächlichen Texturen, d. h. auf die Texturen, die durch das Kamerasystem generiert werden, lässt sich einerseits der Informationsgehalt der Darstellung auf der Anzeigevorrichtung reduzieren, andererseits ist der Rechenaufwand zum Generieren der Darstellung reduziert. Somit wird einerseits dem Fahrer des Fahrzeugs ein Fokus auf relevante Informationen ermöglicht, andererseits wird die benötigte Rechenleistung erheblich reduziert.

Die Unteransprüche haben bevorzugte Weiterbildungen der Erfindung zum Inhalt.

Vorteilhafterweise wird anhand des Selektionskriteriums festgelegt, ob die zum Belegen der virtuellen dreidimensionalen Objekte und/oder des virtuellen dreidimensionalen Raums vorgesehene Texturen mittels eines vordefinierten Filters bearbeitet werden. Insbesondere kann durch den vordefinierten Filter ein Kontrast der Texturen erhöht werden. Somit besteht weiterhin die Möglichkeit, Texturen darzustellen, während gleichzeitig ein Erkennen der virtuellen dreidimensionalen Objekte auf der Anzeigevorrichtung verbessert ist.

Insbesondere ist vorgesehen, dass der vordefinierte Filter eine Grauschattierung umfasst. Die Grauschattierung verringert die Farbtiefe der Texturen, wodurch eine Kontrastverstärkung eintritt. Gleichzeitig ist durch die Grauschattierung der Informationsgehalt der Texturen reduziert, so dass wiederum ein Erkennen der virtuellen dreidimensionalen Objekte auf der Anzeigevorrichtung für den Fahrer vereinfacht ist.

Die vordefinierte Textur ist vorteilhafterweise ein vordefinierter Helligkeitsverlauf. Durch den vordefinierten Helligkeitsverlauf sind lediglich eine Kontur und/oder Außenflächen der virtuellen dreidimensionalen Objekte dargestellt. Dies bedeutet, dass lediglich Umrisse und/oder die Form der virtuellen dreidimensionalen Objekte auf der Anzeigevorrichtung erkennbar sind. Somit wird keinerlei Textur dargestellt, wodurch der Rechenaufwand beim Generieren der Darstellung auf der Anzeigevorrichtung erheblich verringert ist. Gleichzeitig kann der Fahrer des Fahrzeugs das Fahrzeug sicher und zuverlässig durch die Hindernisse in der Umgebung lenken, was insbesondere beim Einparken des Fahrzeugs von Vorteil ist. Insbesondere wird der Fahrer nicht durch die detailreichen Texturen von den eigentlichen Hindernissen abgelenkt.

In einer weiteren bevorzugten Ausführungsform ist vorgesehen, dass zumindest ein Teil der virtuellen dreidimensionalen Objekte, insbesondere alle virtuellen dreidimensionalen Objekte, durch eine zumindest partielle Überlagerung auf der Anzeigevorrichtung hervorgehoben werden. Die Überlagerung umfasst vorteilhafterweise eine Umrahmung des entsprechenden virtuellen dreidimensionalen Objekts. Auf diese Weise lassen sich die Hindernisse in der Umgebung zuverlässig visualisieren. Der Fahrer des Fahrzeugs kann somit eindeutig erkennen, wo sich Hindernisse in der Umgebung befinden, und ob diese Hindernisse eine Gefahr für sein Fahrzeug darstellen. Ebenso sind weitere Überlagerungen vorteilhaft, die dem Fahrer zusätzliche Hinweise auf Merkmale in der Umgebung geben. So ist es beispielsweise ermöglicht, einen frei verfügbaren Parkplatz durch entsprechende Markierungen auf der Anzeigevorrichtung hervorzuheben.

Das Selektionskriterium ist vorteilhafterweise eine Benutzereingabe. Somit ist durch den Benutzer frei wählbar, ob er eine vereinfachte Darstellung mit zumindest einer vordefinierten Textur oder eine komplexere Darstellung mit den Texturen des Kamerasystems benötigt. Ebenso kann der Benutzer festlegen, ob zumindest ein Teil der Texturen des Kamerasystems mit einem vordefinierten Filter bearbeitet werden soll. Somit kann der Fahrer frei wählen, welche Ansicht in einer aktuellen Situation den größtmöglichen Informationsgehalt bietet, ohne durch eine Vielzahl von aktuell unnötigen Informationen zu verwirren.

Das Selektionskriterium umfasst ein Aktivieren eines Einparkassistenzsystems. In einer weiteren Ausführungsform ist bevorzugt vorgesehen, dass das Selektionskriterium ein erfolgreiches Erkennen eines Parkplatzes umfasst. Somit erfolgt ein Wechsel einer Darstellung automatisch. Auf diese Weise kann dem Fahrer des Fahrzeugs die derzeit objektiv beste Darstellung angeboten werden. So kann während eines aktiven Einparkassistenzsystems eine Darstellung mit lediglich vordefinierten Texturen verwendet werden, um dem Fahrer auf einfache Art und Weise zu illustrieren, welche Hindernisse das Einparkassistenzsystem erkannt hat und wie basierend auf diesen Hindernissen die Einparkstrategie erfolgt.

Die Erfindung betrifft außerdem ein Computerprogramm, das eingerichtet ist, das Verfahren wie zuvor beschrieben, auszuführen. Das Computerprogramm ist insbesondere ein Computerprogramm, umfassend maschinenlesbare Instruktionen, die, wenn sie auf einer Rechenvorrichtung ausgeführt werden, die Rechenvorrichtung veranlassen, die Schritte des zuvor beschriebenen Verfahrens auszuführen. Bei der Rechenvorrichtung handelt es sich insbesondere um ein Steuergerät eines Fahrzeugs.

Des Weiteren umfasst die Erfindung ein maschinenlesbares Speichermedium. Auf dem maschinenlesbaren Speichermedium ist das zuvor beschriebene Computerprogramm gespeichert. Bei dem maschinenlesbaren Speichermedium handelt es sich insbesondere um einen optischen Datenträger und/oder einen magnetischen Datenträger und/oder um einen Flash-Speicher.

Schließlich betrifft die Erfindung ein Steuergerät zum Ausführen des Verfahrens, wie zuvor beschrieben. Ebenso ist das Steuergerät vorteilhafterweise zum Durchführen des Computerprogramms, wie zuvor beschrieben, ausgebildet.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine schematische Darstellung eines Fahrzeugs mit einem Steuergerät zum Ausführen eines Verfahrens gemäß einem Ausführungsbeispiel der Erfindung,
- Figur 2: ein erstes Beispiel einer Darstellung, die mittels dem Verfahren gemäß dem Ausführungsbeispiel der Erfindung generiert wird,
- Figur 3: ein zweites Beispiel einer Darstellung, die mittels dem Verfahren gemäß dem Ausführungsbeispiel der Erfindung generiert wird,
- Figur 4: ein drittes Beispiel einer Darstellung, die mittels dem Verfahren gemäß dem Ausführungsbeispiel der Erfindung generiert wird, und
- Figur 5: ein viertes Beispiel einer Darstellung, die mittels dem Verfahren gemäß dem Ausführungsbeispiel der Erfindung generiert wird.

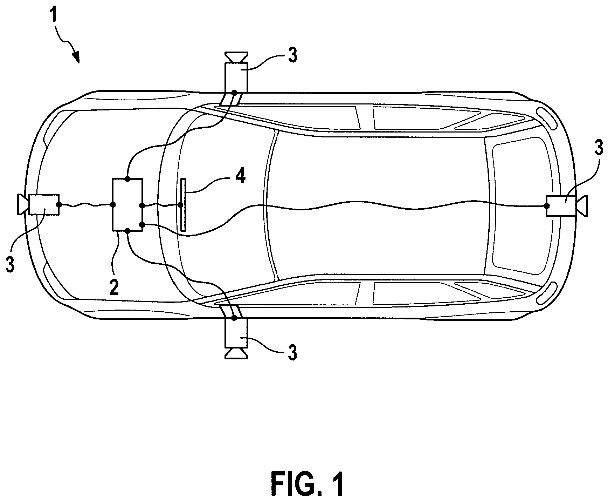

Ausführung der beanspruchten Erfindung: Figur 1 zeigt schematisch ein Fahrzeug 1 umfassend ein Steuergerät 2 gemäß einem Ausführungsbeispiel der Erfindung.

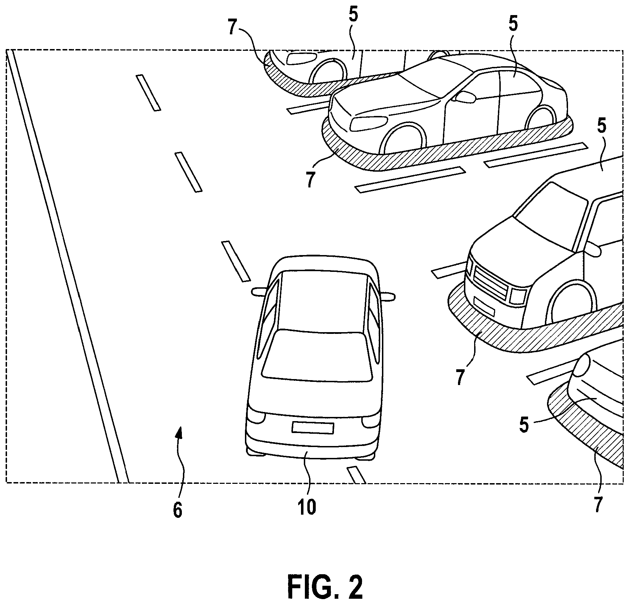

Das Fahrzeug 1 umfasst ein Kamerasystem 3, das zum Erfassen einer Umgebung rund um das Fahrzeug 1 ausgebildet ist. Somit lässt sich die vollständige Umgebung des Fahrzeugs 1 durch das Kamerasystem 3 abtasten. Das Steuergerät 2 dient zum Erstellen einer Darstellung auf einer Anzeigevorrichtung 4, um dem Fahrer die Umgebung darzustellen. Dabei ist vorgesehen, dass das Steuergerät 2 die von dem Kamerasystem 3 erfassten Hindernisse aus der Umgebung des Fahrzeugs auf der Anzeigevorrichtung 4 in einem virtuellen dreidimensionalen Raum 6 als virtuelle dreidimensionale Objekte 5 darstellt. Dies ist in den Figuren 2 - 5 gezeigt. Die Wahl der Darstellung, die auf der Anzeigevorrichtung 4 dargestellt werden soll, wird anhand eines Selektionskriteriums getroffen.

Das Selektionskriterium ist vorteilhafterweise eine Benutzereingabe. Somit kann der Benutzer wählen, welche verschiedenen Darstellungen er betrachten möchte. Alternativ kann das Selektionskriterium automatisch festgelegt werden, indem die Darstellung, basierend auf einem erfolgreichen Erkennen eines Parkplatzes und/oder basierend auf einem Aktivieren eines Einparkassistenzsystems, gewählt wird. Ziel ist, dem Fahrer des Fahrzeugs stets ein optimales Bild der Umgebung anzuzeigen, das relevante Informationen umfasst, ohne den Fahrer mit einer großen Vielzahl an Informationen zu überfordern. Gleichzeitig ist durch die selektive Wahl der Darstellung ein Rechenaufwand innerhalb des Steuergeräts 2 erheblich reduziert, da auch Darstellungen mit reduziertem Informationsgehalt auf der Anzeigevorrichtung angezeigt werden und nicht fortwährend Darstellungen mit maximalem Informationsgehalt generiert werden müssen.

Figur 2 zeigt schematisch ein erstes Beispiel einer Darstellung auf der Anzeigevorrichtung 4. Dabei werden erfasste Hindernisse aus der Umgebung des Fahrzeugs als virtuelle dreidimensionale Objekte 5 in einem virtuellen dreidimensionalen Raum 6 dargestellt. Zur besseren Unterscheidbarkeit ist außerdem vorgesehen, dass Umrahmungen 7 rund um die Hindernisse 5 angezeigt werden. Somit kann der Fahrer des Fahrzeugs 1 die Hindernisse in der Umgebung leicht anhand der virtuellen dreidimensionalen Objekte 5 erkennen. Zur besseren Übersicht ist außerdem bevorzugt vorgesehen, dass eine Repräsentation 10 des Fahrzeugs 1 in dem virtuellen dreidimensionalen Raum 6 angezeigt wird.

In dem in Figur 2 gezeigten Beispiel ist vorgesehen, dass sämtliche virtuelle dreidimensionale Objekte 5 und der virtuelle dreidimensionale Raum mit Texturen belegt sind, die mittels des Kamerasystems 3 erfasst wurden. Dies bedeutet, dass eine fotorealistische Darstellung erzeugt wird. Dem Fahrer des Fahrzeugs 1 ist somit eine Vielzahl von unterschiedlichen Informationen in der Darstellung bereitgestellt. Sollten einzelne Hindernisse nicht erkannt werden, und somit auch nicht als virtuelle dreidimensionale Objekte 5 angezeigt werden, so besteht für den Fahrer weiterhin die Möglichkeit, diese Hindernisse anhand der Texturen zu erkennen. Allerdings besteht die Gefahr, dass der Fahrer des Fahrzeugs durch eine Vielzahl von Informationen überfordert ist. Somit kann der Fahrer des Fahrzeugs 1 eventuell wichtige Informationen übersehen, das bedeutet, es besteht die Gefahr, dass das Fahrzeug 1 mit einem Hindernis kollidiert, da der Fahrer die Annäherung der Repräsentation 10 des Fahrzeugs 1 an ein virtuelles dreidimensionales Objekt 5 übersehen hat.

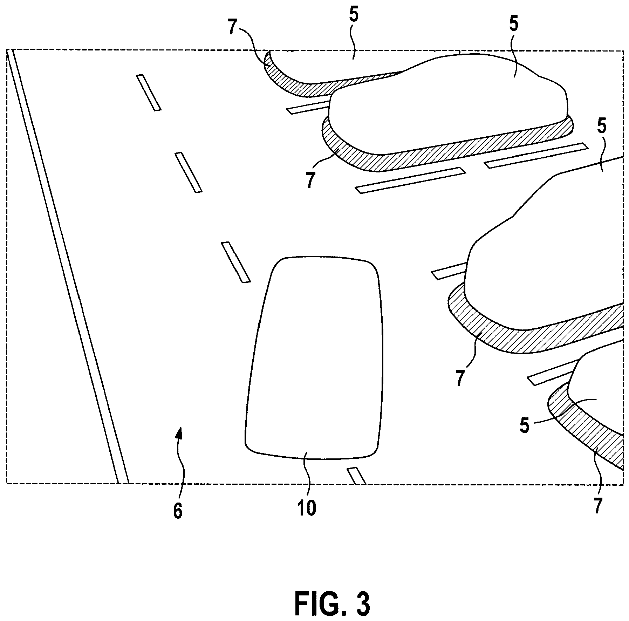

In Figur 3 ist ein zweites Beispiel dargestellt. In diesem Beispiel erfolgt eine Anzeige ohne Texturen. Die Szenerie ist die gleiche wie in Figur 2. Im Unterschied zu Figur 2 werden die virtuellen dreidimensionalen Objekte 5 und der virtuelle dreidimensionale Raum 6 nicht mit Texturen belegt. Dies bedeutet, dass die virtuellen dreidimensionalen Objekte 5 und der virtuelle dreidimensionale Raum 6 lediglich einen Helligkeitsverlauf aufweisen, der eine Darstellung der Umrisse der virtuellen dreidimensionalen Objekte 5 umfasst. Bevorzugt ist wiederum vorgesehen, dass durch Hervorhebungen 7 die virtuellen dreidimensionalen Objekte 5 hervorgehoben werden.

In der in Figur 3 gezeigten Darstellung ist ein Informationsgehalt lediglich auf das Vorhandensein und Nicht-Vorhandensein von Hindernissen beschränkt. Der Fahrer des Fahrzeugs 1 wird somit nicht durch die Vielzahl von unterschiedlichen Texturen überfordert, vielmehr kann sich der Fahrer des Fahrzeugs 1 darauf konzentrieren, nicht mit Hindernissen der Umgebung zu kollidieren, das bedeutet, stets einen Abstand zwischen der Repräsentation 10 des Fahrzeugs 1 und den virtuellen dreidimensionalen Objekten 5 zu halten.

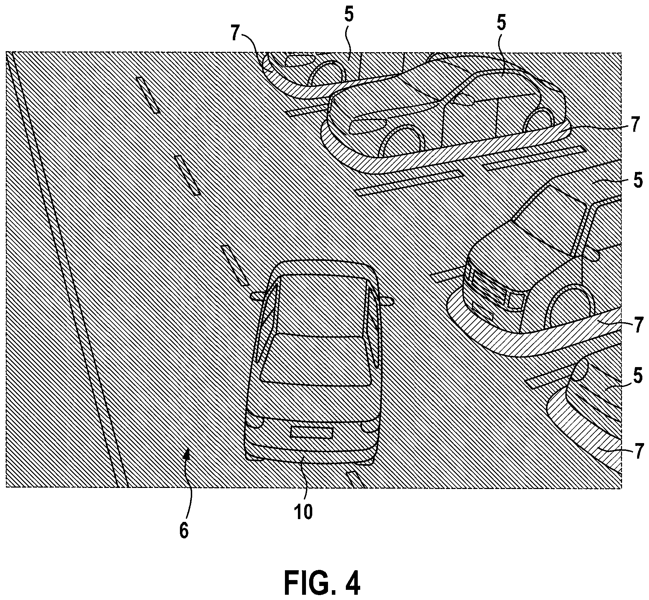

Figur 4 zeigt schließlich ein drittes Beispiel der Darstellung. Dabei erfolgt eine Verwendung von Texturen wie in Figur 2 dargestellt. Im Unterschied zu Figur 2 wird in diesem Beispiel ein Filter über die Texturen gelegt. Ein solcher Filter ist insbesondere eine Grauschattierung. Somit ist ein Kontrast der Anzeige erhöht, während gleichzeitig eine Farbtiefe verringert ist. Auf diese Weise ist eine Darstellung realisiert, die hinsichtlich ihres Informationsgehalts zwischen der in Figur 2 und der in Figur 3 gezeigten Darstellung rangiert. Dem Fahrer des Fahrzeugs werden weiterhin Texturen dargestellt, so dass eventuell nicht erkannte Hindernisse durch den Fahrer erkannt werden können, gleichzeitig sind die erkannten Hindernisse durch die virtuellen dreidimensionalen Objekte 5 zuverlässig durch den Fahrer erkennbar.

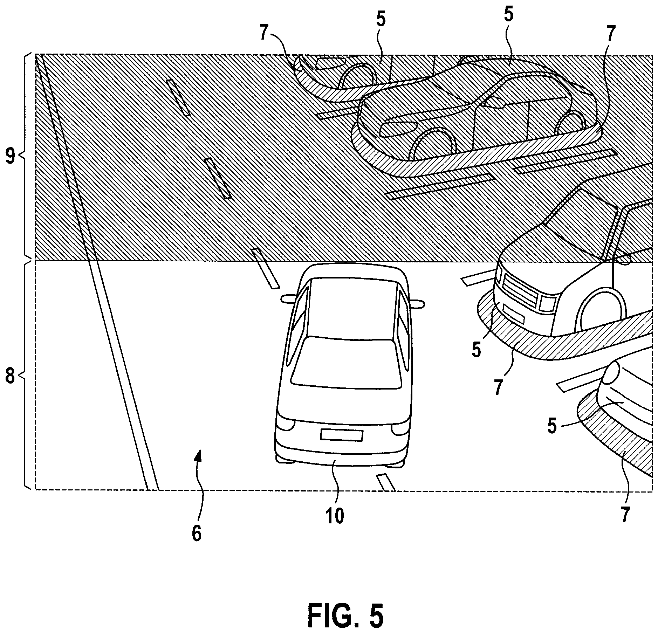

Schließlich zeigt Figur 5 ein viertes Beispiel. In diesem Beispiel ist die Darstellung in einen ersten Bereich 8 und in einen zweiten Bereich 9 aufgeteilt. Dabei entspricht der erste Bereich 8 dem ersten Beispiel, wie in Figur 2 gezeigt, während der zweite Bereich 9 dem dritten Beispiel, wie in Figur 3 gezeigt, entspricht. Somit erfolgt ein Übergang von Texturen, wie durch das Kamerasystem 3 generiert, zu solchen Texturen, die mit einem vordefinierten Filter bearbeitet wurden. Somit lassen sich die Vorteile des hohen Detaillierungsgrads für einen Nahbereich mit den Vorteilen eines erhöhten Kontrasts im Fernbereich kombinieren.

## Patentansprüche

1. Verfahren zur Darstellung von Bildern eines Kamerasystems (3) eines Fahrzeugs (1),
• wobei mit dem Kamerasystem (3) erfasste Hindernisse aus der Umgebung des Fahrzeugs (1) auf einer Anzeigevorrichtung (4) in einem virtuellen dreidimensionalen Raum (6) als virtuelle dreidimensionale Objekte (5) dargestellt werden, und
• wobei anhand eines Selektionskriteriums festgelegt wird, ob die virtuellen dreidimensionalen Objekte (5) und/oder der virtuelle dreidimensionale Raum (6)
∘ mit Texturen belegt werden, die durch das Kamerasystem (3) generiert werden, oder
∘ mit zumindest einer vordefinierten Textur belegt werden,
wobei das Selektionskriterium ein Aktivieren eines Einparkassistenzsystems umfasst; wobei
ein Wechsel der Darstellung automatisch erfolgt; wobei
während eines aktiven Einparkassistenzsystems eine Darstellung mit lediglich vordefinierten Texturen verwendet wird.

2. Verfahren nach Anspruch 1, **dadurch gekennzeichnet, dass** anhand des Selektionskriteriums festgelegt wird, ob die zum Belegen der virtuellen dreidimensionalen Objekte (5) und/oder des virtuellen dreidimensionalen Raums (6) vorgesehenen Texturen mittels eines vordefinierten Filters bearbeitet werden.

3. Verfahren nach Anspruch 2, **dadurch gekennzeichnet, dass** der vordefinierte Filter eine Grauschattierung umfasst.

4. Verfahren nach einem der vorhergehenden Ansprüche, **dadurch gekennzeichnet, dass** die vordefinierte Textur ein vordefinierter Helligkeitsverlauf ist, um lediglich eine Kontur und/oder Außenflächen der virtuellen dreidimensionalen Objekte (5) darzustellen.

5. Verfahren nach einem der vorhergehenden Ansprüche, **dadurch gekennzeichnet, dass** zumindest ein Teil der virtuellen dreidimensionalen Objekte (5), insbesondere alle virtuelle dreidimensionale Objekte (5), durch eine zumindest partielle Überlagerung (7), insbesondere durch eine Umrahmung, auf der Anzeigevorrichtung (4) hervorgehoben werden.

6. Verfahren nach einem der vorhergehenden Ansprüche, **dadurch gekennzeichnet, dass** das Selektionskriterium eine Benutzereingabe ist.

7. Computerprogramm, umfassend Befehle, die bei der Ausführung des Programms durch einen Computer diesen veranlassen, die Schritte des Verfahrens nach einem der vorhergehenden Ansprüche auszuführen.

8. Maschinenlesbares Speichermedium, auf dem das Computerprogramm nach Anspruch 7 gespeichert ist.

9. Steuergerät (2) eingerichtet zum Ausführen des Verfahrens nach einem der Ansprüche 1 bis 6.

## Claims

1. Method for displaying images from a camera system (3) of a vehicle (1),
• wherein obstacles from the surrounding area of the vehicle (1), which are detected using the camera system (3), are displayed as virtual three-dimensional objects (5) on a display apparatus (4) in a virtual three-dimensional space (6), and
• wherein it is determined on the basis of a selection criterion whether the virtual three-dimensional objects (5) and/or the virtual three-dimensional space (6)
∘ have textures which are generated by the camera system (3) placed on them, or
∘ have at least one predefined texture placed on them,
wherein the selection criterion comprises activation of a parking assistance system, wherein a change of the display takes place automatically, wherein a display with only predefined textures is used during an active parking assistance system.

2. Method according to Claim 1, **characterized in that** it is determined on the basis of the selection criterion whether the textures to be placed on the virtual three-dimensional objects (5) and/or the virtual three-dimensional space (6) are processed by means of a predefined filter.

3. Method according to Claim 2, **characterized in that** the predefined filter comprises a greyscale.

4. Method according to any of the preceding claims, **characterized in that** the predefined texture is a predefined brightness gradient to display merely a contour and/or outer surfaces of the virtual three-dimensional objects (5).

5. Method according to any of the preceding claims, **characterized in that** at least some of the virtual three-dimensional objects (5), in particular all the virtual three-dimensional objects (5), are highlighted on the display apparatus (4) by an at least partial overlay (7), in particular by a border.

6. Method according to any of the preceding claims, **characterized in that** the selection criterion is a user input.

7. Computer program comprising instructions which, when the program is executed by a computer, cause the latter to carry out the steps of the method according to any of the preceding claims.

8. Machine-readable storage medium on which the computer program according to Claim 7 is stored.

9. Controller (2) configured to carry out the method according to any of Claims 1 to 6.

## Revendications

1. Procédé de représentation d'images d'un système de caméra (3) d'un véhicule (1),
• des obstacles détectés par le système de caméra (3) dans l'environnement du véhicule (1) étant représentés sur un dispositif d'affichage (4) dans un espace virtuel tridimensionnel (6) sous la forme d'objets virtuels tridimensionnels (5), et
• un critère de sélection étant utilisé pour établir si les objets tridimensionnels virtuels (5) et/ou l'espace tridimensionnel virtuel (6)
∘ sont garnis de textures qui sont générées par le système de caméra (3), ou
∘ sont garnis d'au moins une texture prédéfinie,
le critère de sélection comprenant une activation d'un système d'assistance au stationnement ; un changement de la représentation s'effectuant automatiquement ; une représentation avec seulement des textures prédéfinies étant utilisée pendant un système d'assistance au stationnement actif.

2. Procédé selon la revendication 1, **caractérisé en ce que** le critère de sélection est utilisé pour établir si les textures prévues pour garnir les objets tridimensionnels virtuels (5) et/ou l'espace tridimensionnel virtuel (6) sont traitées au moyen d'un filtre prédéfini.

3. Procédé selon la revendication 2, **caractérisé en ce que** le filtre prédéfini comprend une nuance de gris.

4. Procédé selon l'une des revendications précédentes, **caractérisé en ce que** la texture prédéfinie est un dégradé de luminosité prédéfini afin de représenter uniquement un contour et/ou des surfaces extérieures des objets tridimensionnels virtuels (5).

5. Procédé selon l'une des revendications précédentes, **caractérisé en ce qu'**au moins une partie des objets virtuels tridimensionnels (5), notamment tous les objets virtuels tridimensionnels (5), sont mis en évidence par une superposition (7) au moins partielle, notamment par un encadrement, sur le dispositif d'affichage (4).

6. Procédé selon l'une des revendications précédentes, **caractérisé en ce que** le critère de sélection est une entrée d'utilisateur.

7. Programme informatique, comprenant des instructions qui, lors de l'exécution du programme par un ordinateur, amènent celui-ci à exécuter les étapes du procédé selon l'une des revendications précédentes.

8. Support de stockage lisible par machine, sur lequel est enregistré le programme informatique selon la revendication 7.

9. Dispositif de commande (2), conçu pour mettre en oeuvre le procédé selon l'une des revendications 1 à 6.
